# EUROPÄISCHE PATENTSCHRIFT

(11) **EP 3 032 032 B1**
(45) Veröffentlichungstag und Bekanntmachung des Hinweises auf die Patenterteilung: **12.06.2019**
(21) Anmeldenummer: 14197574.8
(22) Anmeldetag: 12.12.2014
(51) Int. Cl.: F01D 5/14, F01D 9/04, F01D 25/30, F02K 1/78, F02K 3/06

(54) **Austrittsleitgitter und Mantelstromtriebwerk mit einem Austrittsleitgitter**
Outlet guide vanes and turbofan with outlet guide vanes
Aubes directrices de sortie et turboréacteur à double flux avec des aubes directrices de sortie

(43) Veröffentlichungstag der Anmeldung: 15.06.2016
(73) Patentinhaber: MTU Aero Engines AG, 80995 München (DE)
(72) Erfinder: Ramm, Günter, 82223 Eichenau (DE)

(56) Entgegenhaltungen:
- EP-A1- 2 644 846
- EP-A1- 2 657 482
- DE-A1-102011 076 804
- US-A- 4 023 350

## Beschreibung

Die Erfindung betrifft ein Austrittsleitgitter nach dem Oberbegriff des Anspruchs 1. Die Erfindung betrifft ferner ein Mantelstromtriebwerk nach Anspruch 7.

Bei bekannten Gasturbinen wird hinter der Turbine, insbesondere der Niederdruckturbine, ein Austrittsleitgitter (exit guide vane) angeordnet, um die drallbehaftete Strömung hinter den Niederdruckturbinenlaufschaufeln in die axiale Richtung umzulenken. Ein solches Austrittsleitgitter 16 ist beispielsweise in der oberen Hälfte der Figur 1 und in der Figur 2 gezeigt. In der Figur 3 ist die entsprechende Druckverteilung abgebildet.

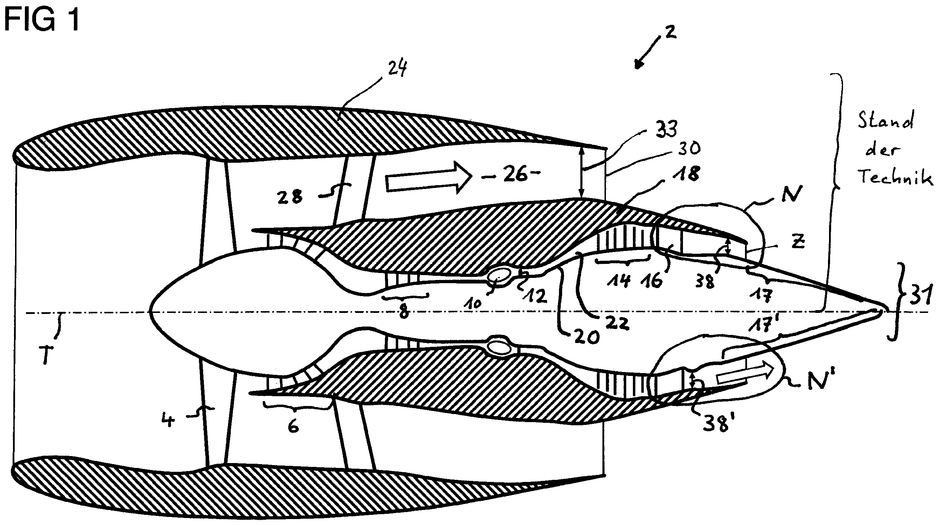

Die Figur 1 zeigt einen Längsschnitt durch ein Mantelstromtriebwerk 2, das in Strömungsrichtung betrachtet einen Fan 4, einen Niederdruckverdichter 6 mit hier fünf Stufen, einen Hochdruckverdichter 8 mit hier vier Stufen, eine Brennkammer 10, eine Hochdruckturbine 12 mit hier einer Stufe, eine Niederdruckturbine 14 mit hier fünf Stufen und ein Austrittsleitgitter 16 aufweist. Der Niederdruckverdichter 6 und die Niederdruckturbine 14 sind über eine erste (nicht eingezeichnete) Welle miteinander verbunden. Der Fan 4 kann direkt mit der ersten Welle verbunden sein, oder der Fan 4 kann indirekt unter Zwischenschaltung eines Getriebes mit der ersten Welle verbunden sein. Der Hochdruckverdichter 8 und die Hochdruckturbine 12 sind über eine zweite (nicht eingezeichnete) Welle miteinander verbunden. Ein Außengehäuse 18 umschließt den Niederdruckverdichter 6, den Hochdruckverdichter 8, die Brennkammer 10, die Hochdruckturbine 12, die Niederdruckturbine 14 und das Austrittsleitgitter 16, welche zusammen ein Kerntriebwerk 31 bilden. Vorzugsweise ragt ein Austrittskonus 17 aus dem Außengehäuse 18 hervor. Das Außengehäuse 18 und ein Innengehäuse 20 begrenzen den ringförmigen Heißgaskanal 22. Vor dem Fan 4, außen um den Fan 4 und teilweise um das Außengehäuse 18 des Kerntriebwerks 31 ist eine Gondel 24 angeordnet. Die Gondel 24 und das Außengehäuse 18 begrenzen einen ringförmigen Nebenkanal 26. Die Gondel 24 ist über mehrere Streben 28 mit dem Außengehäuse 18 verbunden. In diesem Beispiel ist das stromabwärtige Ende 30 der Gondel in axialer Richtung auf der Höhe der Niederdruckturbine 14 angeordnet, so dass der hintere Bereich des Kerntriebwerks 31 (hier ab etwa der Mitte der Niederdruckturbine 14) nicht von der Gondel 24 umschlossen ist. In der Nähe des stromabwärtigen Endes 30 der Gondel 24 ist eine als Nebenstromdüse bezeichnete Engstelle 33 angeordnet. In Strömungsrichtung betrachtet ist nach dem Austrittsleitgitter 16 eine Kernströmungsdüse 38 in der Nähe des stromabwärtigen Endes des Außengehäuses 18 angeordnet.

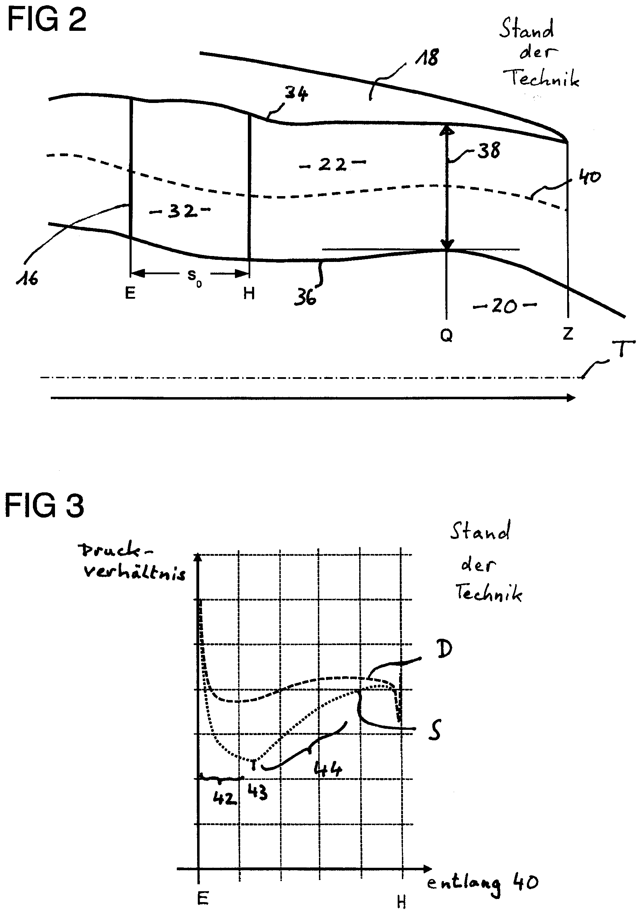

In der Figur 2 ist eine Vergrößerung des ovalen Bereichs N aus Figur 1 gezeigt. In der Figur 2 ist oben ein Teil des Außengehäuses 18 zu erkennen und unten ist ein Teil des Innengehäuses 20 zu erkennen. Die beiden Gehäuse 18 und 20 begrenzen den Heißgaskanal 22. Darin ist eine Leitschaufel 32 des Austrittsleitgitters 16 sichtbar, die eine Vorderkante E und eine Hinterkante H aufweist. Die axiale Profillänge der Leitschaufel 32 beträgt s₀. Der Heißgaskanal 22 wird radial außen (oben in Fig. 2) durch eine äußere Wandung 34, die ein Teil des Außengehäuses 18 darstellt, und radial innen (unten in Fig. 2) durch eine innere Wandung 36 begrenzt, die ein Teil des Innengehäuses 20 darstellt. Die äußere Wandung 34 weist ferner ein stromabwärtiges Ende auf, die eine Austrittskante Z des Außengehäuses 18 bildet. Auf der axialen Höhe Q ist eine Engstelle 38 angeordnet, die als Kernströmungsdüse wirkt. Diese Engstelle 38 ist näher zum stromabwärtigen Ende der äußeren Wandung 34 bzw. an der Austrittskante Z des Außengehäuses 18 als zur Hinterkante H der Leitschaufel 32 angeordnet, so dass der axiale Abstand zwischen HQ größer ist als der axiale Abstand QZ.

Die Figur 3 zeigt die entsprechende Druckverteilung im Heißgaskanal 22 auf der axialen Höhe der Leitschaufel 32 aus Figur 2, wobei die Strömungsverzögerung des Kanals und des Profils der Leitschaufel 32 berücksichtigt wurden. Die obere Kurve D zeigt das Druckverhältnis an der Druckseite der Leitschaufel 32 und die untere Kurve S zeigt das Druckverhältnis an der Saugseite der Leitschaufel 32, wobei auf 50% der Kanalhöhe gemessen wurde. Diese 50%-ige Kanalhöhe wurde als gestrichelte Kurve 40 in der Figur 2 eingezeichnet. Die Kurve 40 unterteilt den Heißkanal 22 in einen radial äußeren bzw. oberen und einen radial inneren bzw. unteren Bereich, bei dem jeweils 50% der Luftmasse strömt.

Im stromaufwärtigen bzw. vorderen Bereich 42 der Kurve S aus Figur 3 verhält sich die Strömung laminar bis zum Minimum 43 der Kurve S. Danach wird die Strömung im Bereich 44 turbulent. Der Verlustbeiwert für das Austrittsleitgitter 16 mit den Wandungen 34 und 36 beträgt hier 100%. Die Eintrittsströmungsgeschwindigkeit an der Leitschaufel 32 beträgt hier 100% und die Austrittsströmungsgeschwindigkeit an der Leitschaufel 32 beträgt hier ca. 110%. In der Mitte des Heißgaskanals 22 erfährt die Strömung somit eine leichte Beschleunigung.

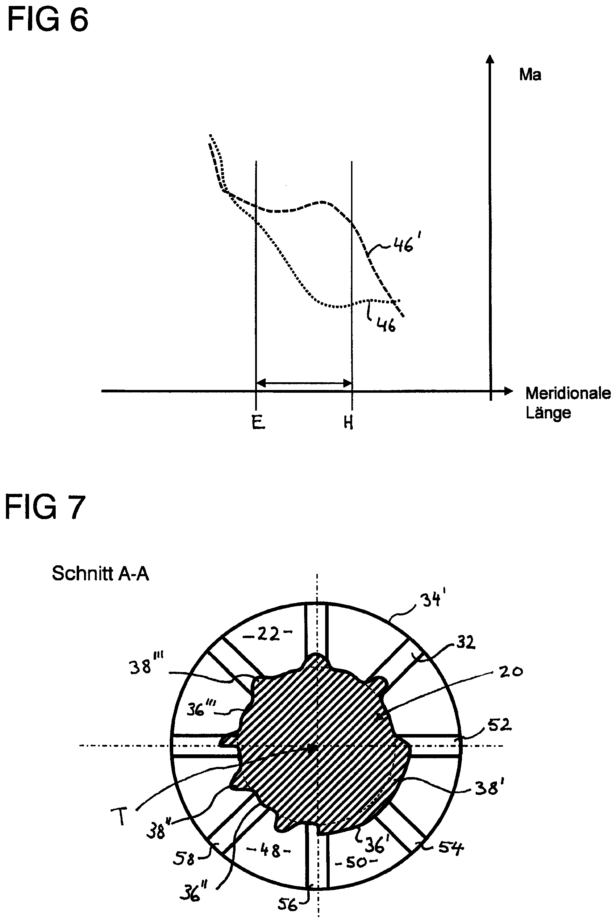

In der Figur 6 wird mit einer gepunkteten Kurve 46 (untere Kurve) die Geschwindigkeit der Strömung entlang der inneren Wandung 36 aus der Figur 2 dargestellt. Dabei wird nur das Kanalprofil berücksichtigt. Dabei kann entnommen werden, dass die Geschwindigkeit an der Vorderkante E der Laufschaufel 32 deutlich höher ist als an der Hinterkante H der Laufschaufel 32. Somit wird die Strömungsgeschwindigkeit, hier insbesondere in der Nähe der inneren Wandung 36, deutlich verzögert.

Bei den bekannten Austrittsleitgittern handelt es sich um ein sogenanntes Verzögerungsgitter, da insgesamt die Zuströmgeschwindigkeit direkt vor dem Austrittsleitgitter größer ist als die Abströmgeschwindigkeit nach dem Austrittsleitgitter. Dies hat den Nachteil, dass die Strömung nicht stark umgelenkt werden kann, da es sonst an den Austrittsleitschaufeln zu unerwünschten Strömungsablösungen führt.

Ein Austrittsleitgitter gemäß dem Stand der Technik ist aus EP 2 644 846 A1 bekannt.

Der vorliegenden Erfindung liegt die Aufgabe zu Grunde ein Austrittsleitgitter vorzustellen, das den Wirkungsgrad der Niederdruckturbine verbessert.

Die Aufgabe wird durch die Merkmale des Anspruchs 1 gelöst. Die Aufgabe wird ferner durch die Merkmale des Anspruchs 7 gelöst.

Die Erfindung betrifft ein Austrittsleitgitter mit einer äußeren Wandung, einer inneren Wandung zur Bildung eines Ringkanals bzw. ringförmigen Heißgaskanals und zur Führung des Heißgasstroms und mit mindestens einer Leitschaufel, die zwischen der äußeren Wandung und der inneren Wandung angeordnet ist. Dabei ist zwischen der Vorderkante der Leitschaufel und dem stromabwärtigen Ende der äußeren Wandung (bzw. der Austrittskante des Außengehäuses) mindestens eine querschnittsverringernde Engstelle angeordnet. Erfindungsgemäß ist im Bereich zwischen der Vorderkante und dem stromabwärtigen Ende mindestens eine absolute Engstelle näher zur Hinterkante der Leitschaufel angeordnet als zum stromabwärtigen Ende der äußeren Wandung. Die absolute Engstelle bildet die sogenannte Kernströmungsdüse im hinteren Bereich des Triebwerks. Durch eine Kombination des Austrittsleitgitters mit der Kernströmungsdüse wird das Austrittsleitgitter zu einem Beschleunigungsgitter, was eine bessere Druckverteilung und geringere Verluste zur Folge hat. Die Gesamtlänge des Triebwerks kann ferner kürzer ausgelegt werden, so dass das Triebwerk leichter werden kann. Da die Druckverluste am erfindungsgemäßen Austrittsleitgitter geringer sind, kann ferner ein höherer Drall aus der Strömung herausgenommen werden. Damit wird der Wirkungsgrad der Niederdruckturbine insgesamt verbessert.

In einer weiteren vorteilhaften Ausgestaltung der Erfindung weist die äußere Wandung in der Nähe der absoluten Engstelle des Heißgaskanals im Bereich zwischen Vorderkante der Leitschaufel und dem stromabwärtigen Ende der äußeren Wandung lokal einen kleineren Radius, bzw. kleineren Abstand zur Triebwerksachse, auf und/oder weist die innere Wandung in der Nähe der absoluten Engstelle lokal einen größeren Radius, bzw. größeren Abstand zur Triebwerksachse, auf als in axial unmittelbar benachbarten Bereichen. "In der Nähe" bedeutet im Sinne der vorliegenden Anmeldung eine Entfernung von nicht mehr als 20%, vorzugsweise nicht mehr als 10%, der axialen Profillänge der Schaufel. Somit kann die Engstelle nur über das Führen der äußeren Wandung in den Heißkanal gebildet werden. Alternativ kann die Engstelle nur über das Führen der inneren Wandung in den Heißkanal gebildet werden. Oder aber die Engstelle kann durch das Führen beider Wandungen in dem Heißkanal gebildet werden. Die letzte Variante bietet den Vorteil, dass die Strömungsgeschwindigkeiten, entlang der beiden Wandungen, an der Hinterkante der Leitschaufel höher sind als an der Vorderkante der Leitschaufel. Dies bedeutet, dass sowohl an der äußeren Wandung als auch an der inneren Wandung die Strömung an der Leitschaufel beschleunigt wird. Die Strömungscharakteristik eines Triebwerksbauteils wird für einen bestimmten Betriebspunkt ausgelegt (Auslegungspunkt). Wird von diesem Auslegungspunkt abgewichen, kommt es unweigerlich zu Fehlanströmungen. Allerdings wird das Verhalten bei Fehlanströmungen durch diese beschleunigte Strömung deutlich verbessert.

In einer weiteren vorteilhaften Ausgestaltung der Erfindung ist in Umfangsrichtung betrachtet die absolute Engstelle auf der Höhe der Leitschaufeln und/oder zwischen den Leitschaufeln angeordnet. Dabei kann die Engstelle in Umfangsrichtung betrachtet nicht nur an einem Ort, sondern kann auch über den gesamten Umfang angeordnet sein. Unter einer absoluten Engstelle ist eine Engstelle zu verstehen, die entlang der axialen Achse, jedoch für einen bestimmten Umfangswinkel, den kleinsten Flächenquerschnitt aufweist. Ist die absolute Engstelle rotationssymmetrisch, so ist die axiale Lage der absoluten Engstelle vom Umfangswinkel unabhängig. Sind dagegen mehrere absolute Engstellen vorgesehen, die beispielsweise nur im Bereich der Hinterkante der Leitschaufel angeordnet sind, so ist beim axialen Schnitt, der zwischen den Schaufeln verläuft, in der Nähe der Hinterkante keine Engstelle angeordnet. In diesem Fall ist die absolute Engstelle vom Umfangswinkel abhängig.

In einer weiteren vorteilhaften Ausgestaltung der Erfindung ist das Flächenverhältnis zwischen der Ringfläche an der absoluten Engstelle und der Ringfläche an der Vorderkante kleiner als 75%. Es gilt somit A_{Q}/A_{E} < 75%, wobei A_{Q} für die Ringquerschnittsfläche an der Engstelle und A_{E} für die Ringquerschnittsfläche an der Vorderkante der Leitschaufel steht. Mit einem solchen Verhältnis wird gewährleistet, dass die Strömung ausreichend beschleunigt wird.

Gemäß der Erfindung ist in der axialen Richtung betrachtet die absolute Engstelle des Heißgaskanals im Bereich zwischen Vorderkante der Leitschaufel und dem stromabwärtigen Ende der äußeren Wandung in Strömungsrichtung vor oder in Strömungsrichtung nach oder direkt an der Hinterkante der Leitschaufel angeordnet, wobei der axiale Abstand der absoluten Engstelle zur Hinterkante maximal 30%, vorzugsweise maximal 20%, noch stärker bevorzugt maximal 10%, der axialen Profillänge der Leitschaufel beträgt. Die absolute Engstelle kann somit direkt an der Hinterkante der Leitschaufel angeordnet sein. Auch kann die absolute Engstelle in Strömungsrichtung betrachtet vor der Hinterkante angeordnet sein. Sind mehrere Engstellen vorhanden, so kann eine Engstelle in Strömungsrichtung betrachtet vor und die andere Engstelle in Strömungsrichtung betrachtet nach der Hinterkante der Leitschaufel angeordnet sein. Dabei sind die Engstellen sowohl in Umfangsrichtung als auch in axialer Richtung versetzt angeordnet.

Erfindungsgemäß ist ein Mantelstromtriebwerk mit einem erfindungsgemäßen Austrittsleitgitter ausgestattet. Vorzugszugsweise sind die Mantelstromtriebwerke mit einem Nebenstromverhältnis von über 6 gemeint, da diese typischerweise keine Mischung des Nebengasstroms mit dem Heißgasstrom innerhalb des Triebwerks vorsehen.

Weitere Vorteilhafte Ausgestaltung der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- - Figur 1:: einen Längsschnitt durch einen Mantelstromtriebwerk, wobei in der oberen Hälfte der Stand der Technik und in der unteren Hälfte eine erfindungsgemäße Ausführungsform dargestellt ist,
- - Figur 2:: eine Vergrößerung des Bereichs N aus Figur 1 eines bekannten Mantelstromtriebwerkes,
- - Figur 3:: die Druckverteilung an der Leitschaufel aus Figur 2,

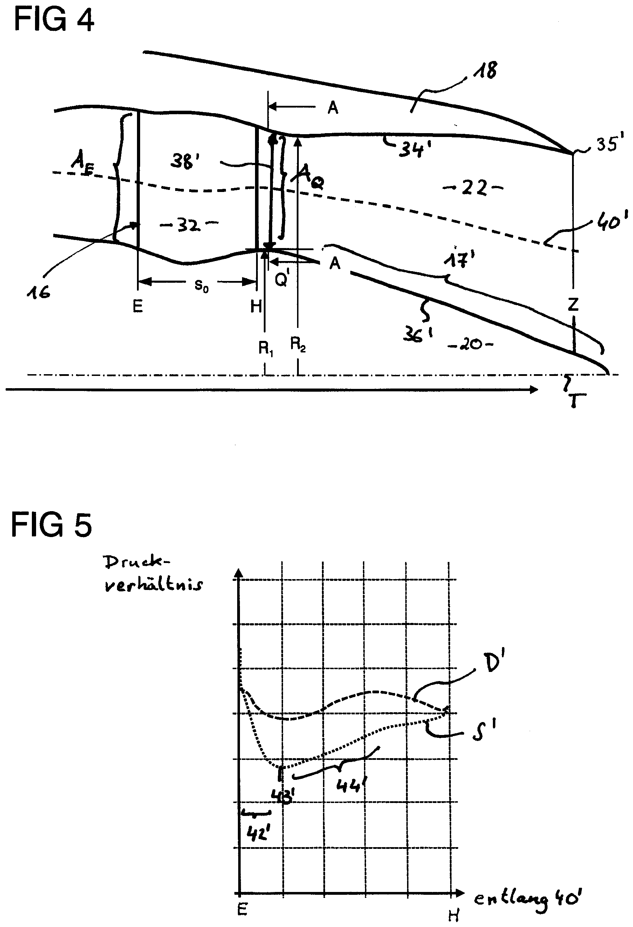

- - Figur 4:: eine Vergrößerung des Bereichs N' aus Figur 1 eines erfindungsgemäßen Mantelstromtriebwerkes,
- - Figur 5:: die Druckverteilung an der Leitschaufel aus Figur 4,
- - Figur 6:: die Kanalverzögerung auf der Höhe der Leitschaufel, und
- - Figur 7:: einen Schnitt entlang der Linie A-A in Figur 4.

Die Figur 1 zeigt einen Längsschnitt durch ein erfindungsgemäßes Mantelstromtriebwerk 2, das in Strömungsrichtung betrachtet einen Fan 4, einen Niederdruckverdichter 6 mit mehreren Stufen, einen Hochdruckverdichter 8 mit mehreren Stufen, eine Brennkammer 10, eine Hochdruckturbine 12 mit hier einer Stufe, eine Niederdruckturbine 14 mit mehreren Stufen und ein Austrittsleitgitter 16 aufweist. Ein Außengehäuse 18 umschließt den Niederdruckverdichter 6, den Hochdruckverdichter 8, die Brennkammer 10, die Hochdruckturbine 12, die Niederdruckturbine 14 und das Austrittsleitgitter 16. Vorzugsweise ragt in der unteren Hälfte der Figur 1 ein Austrittskonus 17' aus dem Außengehäuse 18 hervor, der etwas kürzer ist als der bekannte Austrittskonus 17, der in der oberen Hälfte der Figur 1 abgebildet ist.

Die Unterschiede zum Stand der Technik sollen anhand der Figur 4 erläutert werden. In der Figur 4 ist eine Vergrößerung des ovalen Bereichs N' aus Figur 1 gezeigt. Zum besseren Vergleich mit dem Stand der Technik wurde dieser ovale Ausschnitt N aus Figur 1 an der Triebwerksachse T gespiegelt.

In der Figur 4 ist oben ein Teil des Außengehäuses 18 zu erkennen und unten ist ein Teil des Innengehäuses 20 zu erkennen. Die beiden Gehäuse 18 und 20 begrenzen den Heißgaskanal 22. Darin ist eine Schaufel 32 des Austrittsleitgitters 16 angeordnet, die eine Vorderkante E und eine Hinterkante H aufweist. Die axiale Profillänge der Schaufel beträgt s₀. Der Heißgaskanal 22 wird radial außen (oben in Fig. 4) durch die äußere Wandung 34', die ein Teil des Außengehäuses 18 darstellt, und radial innen (unten in Fig. 4) durch die innere Wandung 36' begrenzt, die ein Teil des Innengehäuses 20 darstellt. Das Außengehäuse 18 weist ferner eine Austrittskante Z auf. Das stromabwärtige Ende 35' der äußeren Wandung 34' befindet sich auf der ringförmigen Austrittskante Z (in den Figuren als vertikaler Strich dargestellt). Auf der axialen Höhe Q' ist eine Engstelle 38' angeordnet, die als Kernströmungsdüse wirkt. Diese Engstelle 38' ist näher zur Hinterkante H als zur Austrittskante Z angeordnet, so dass der axiale Abstand zwischen HQ' kleiner ist als der axiale Abstand Q'Z. Dabei ist der Radius R₁ der inneren Wandung 36' in der Nähe der absoluten Engstelle Q' lokal größer als der Radius der unmittelbar benachbarten Bereiche der inneren Wandung 36'. Auch ist der Radius R₂ der äußeren Wandung 34' in der Nähe der absoluten Engstelle Q' lokal kleiner als der Radius der unmittelbar benachbarten Bereiche der äußeren Wandung 34'. Die Radien R₁ und R₂ verlaufen dabei in einer Ebene senkrecht zur Triebwerksachse T.

Die Figur 5 zeigt die Druckverteilung im Heißgaskanal 22 auf der axialen Höhe der Leitschaufel 32 aus Figur 4, wobei die Strömungsverzögerung des Kanals und des Profils der Leitschaufel 32 berücksichtigt wurden. Die Verzögerung von 43' bis zur Hinterkante H ist geringer als in der Figur 3 von Punkt 43 bis zur Hinterkante H, was auch zu geringeren Verlusten führt. Die obere Kurve D' zeigt das Druckverhältnis an der Druckseite der Leitschaufel 32 und die untere Kurve S' zeigt das Druckverhältnis an der Saugseite der Leitschaufel 32, wobei auf 50% der Kanalhöhe gemessen wurde. Diese 50%-ige Kanalhöhe wurde als gestrichelte Kurve 40' in der Figur 4 eingezeichnet. Die Kurve 40' unterteilt den Heißkanal 22 in einen oberen und einen unteren Bereich, bei dem jeweils 50% der Luftmasse strömt.

Im stromaufwärtigen bzw. vorderen Bereich 42' der Kurve S' aus Figur 5 verhält sich die Strömung laminar bis zum Minimum 43' der Kurve S'. Danach wird die Strömung im Bereich 44' turbulent. Der Verlustbeiwert für das Austrittsleitgitter 16 mit den Wandungen 34' und 36' beträgt nur etwa 63% des ursprünglichen Profils aus Figur 2. Die Eintrittsströmungsgeschwindigkeit an der Leitschaufel 32 beträgt ca. 100% und die Austrittsströmungsgeschwindigkeit an der Leitschaufel 32 beträgt ca. 120%. In der Mitte des Heißgaskanals 22 erfährt die Strömung somit eine stärkere Beschleunigung als im Stand der Technik.

In der Figur 6 wird mit einer gestrichelten Kurve 46' (obere Kurve) die Geschwindigkeit der Strömung entlang der inneren Wandung 36' aus Figur 4 dargestellt. Dabei wird nur das Kanalprofil berücksichtigt. Dabei kann entnommen werden, dass die Geschwindigkeit an der Vorderkante E der Laufschaufel 32 ähnlich groß ist wie an der Hinterkante H der Laufschaufel 32. Somit wird die Strömungsgeschwindigkeit, hier insbesondere in der Nähe der inneren Wandung 36', kaum verändert.

Die Figur 7 zeigt einen Schnitt entlang der Linie A-A in Figur 4. In der oberen Hälfte der Figur 7 ist eine erste Ausführungsform mit einer inneren Wandung 36'" darstellt. Dabei sind auf der inneren Wandung 36'" die absoluten Engstellen 38'" in Umfangsrichtung betrachtet auf der Höhe der entsprechenden Leitschaufeln 32 angeordnet. Zwischen den Schaufeln 32 sind keine absolute Engstellen 38'" vorgesehen.

In der linken unteren Hälfte der Figur 7 ist eine zweite Ausführungsform mit einer inneren Wandung 36" darstellt. Dabei sind die absoluten Engstellen 38" in Umfangsrichtung betrachtet zwischen den entsprechenden Leitschaufeln 56 und 58 angeordnet. Auf der Höhe der Leitschaufeln 56 bzw. 58 sind keine absoluten Engstellen 38" vorhanden. Eine freie Fläche 48 wird radial nach innen durch die innere Wandung 36" begrenzt. Die freie Fläche 48 wird radial nach außen durch die äußere Wandung 34' begrenzt. In Umfangsrichtung wird die freie Fläche 48 durch die beiden Leitschaufeln 56 und 58 begrenzt. Die freie Fläche 48 liegt in der zur Triebwerksachse T senkrecht verlaufenden Ebene. Diese Ebene entspricht der Blattebene der Figur 7.

In der rechten unteren Hälfte der Figur 7 ist eine dritte Ausführungsform mit einer inneren Wandung 36' dargestellt, bei der die absolute Engstelle 38' rotationssymmetrisch ist und vom Umfangswinkel unabhängig ist, d.h. diese Engstelle 38' ist sowohl an den Leitschaufeln 52 und 54 als auch zwischen den Leitschaufeln 52 bis 56 angeordnet. Eine freie Fläche 50 wird radial nach innen durch die innere Wandung 36' begrenzt. Die freie Fläche 50 wird radial nach außen durch die äußere Wandung 34' begrenzt. In Umfangsrichtung wird die freie Fläche 50 durch die beiden Leitschaufeln 54 und 56 begrenzt. Die freie Fläche 50 liegt in der zur Triebwerksachse T senkrecht verlaufenden Ebene. Diese Ebene entspricht der Blattebene der abgebildeten Figur 7.

Dabei wird angemerkt, dass die freie Fläche 48 der zweiten Ausführungsform genauso groß sein kann wie die freie Fläche 50 der dritten Ausführungsform.

Diese drei Ausführungsformen können beliebig miteinander kombiniert werden. In der Figur 7 wurde ausschließlich die innere Wandung 36', 36" bzw 36"' konturiert. Es ist ebenso denkbar, dass die äußere Wandung 34' wie die innere Wandung 36', 36" bzw 36'" in Figur 7 konturiert wird.

### Bezugszeichenliste

- 2: Mantelstromtriebwerk
- 4: Fan
- 6: Niederdruckverdichter
- 8: Hochdruckverdichter
- 10: Brennkammer
- 12: Hochdruckturbine
- 14: Niederdruckturbine
- 16: Austrittsleitgitter
- 17: Austrittskonus
- 18: Außengehäuse
- 20: Innengehäuse
- 22: Heißgaskanal
- 24: Gondel
- 26: Nebenkanal
- 28: Streben
- 30: Austrittskante der Gondel
- 31: Kerntriebwerk
- 32: Schaufel vom Austrittsleitgitter
- 34, 34': äußere Wandung
- 35': stromabwärtiges Ende
- 36, 36', 36", 36'": innere Wandung
- 38, 38', 38", 38'": Engstelle
- 40, 40': 50%-ige Kurve
- 42, 42': laminarer Bereich der Kurve
- 43, 43': absolutes Minimum
- 44, 44': turbulenter Bereich der Kurve
- 46, 46': Mach-Kurve an der inneren Wandung
- 48: freie Fläche der zweiten Ausführungsform
- 50: freie Fläche der dritten Ausführungsform
- 52, 54, 56: Schaufel vom Austrittsleitgitter der dritten Ausführungsform
- 56, 58: Schaufel vom Austrittsleitgitter der zweiten Ausführungsform
- A_{Q}: Ringquerschnittsfläche bei Q
- A_{E}: Ringquerschnittsfläche bei E
- E: Vorderkante von Schaufel 32
- H: Hinterkante von Schaufel 32
- N, N': Vergrößerungsbereiche
- R₁: Radius der inneren Wandung in der Nähe der Engstelle
- R₂: Radius der äußeren Wandung in der Nähe der Engstelle
- Z: Austrittskante von Außengehäuse 18

## Patentansprüche

1. Austrittsleitgitter mit einer äußeren Wandung (34'), einer inneren Wandung (36') zur Bildung eines Ringkanals (22) und zur Führung des Heißgasstroms und mit mindestens einer Leitschaufel (32), die zwischen der äußeren Wandung (34') und der inneren Wandung (36') angeordnet ist, wobei zwischen der Vorderkante (E) der Leitschaufel (32) und dem stromabwärtigen Ende (35') der äußeren Wandung (34') mindestens eine querschnittsverringernde Engstelle (38') angeordnet ist,
wobei mindestens eine absolute Engstelle (38') in dem Bereich zwischen der Vorderkante (E) und dem stromabwärtigen Ende (35') näher zur Hinterkante (H) der Leitschaufel (32) angeordnet ist als zum stromabwärtigen Ende (35') der äußeren Wandung (34'),
**dadurch gekennzeichnet, dass**
in der axialen Richtung betrachtet die absolute Engstelle (38') in Strömungsrichtung vor oder nach oder direkt an der Hinterkante (H) der Leitschaufel (32) angeordnet ist, wobei der axiale Abstand der absoluten Engstelle (38') zur Hinterkante (H) maximal 30% der axialen Profillänge (s₀) der Leitschaufel (32) beträgt.

2. Austrittsleitgitter nach Anspruch 1, **dadurch gekennzeichnet, dass** die äußere Wandung (34') in der Nähe der absoluten Engstelle (38') lokal einen kleineren Radius (R₂) als in axial unmittelbar benachbarten Bereichen aufweist und/oder die innere Wandung (36') in der Nähe der absoluten Engstelle (Q) lokal einen größeren Radius (R₁) als in axial unmittelbar benachbarten Bereichen aufweist.

3. Austrittsleitgitter nach mindestens einem der vorherigen Ansprüche, **dadurch gekennzeichnet, dass** in Umfangsrichtung betrachtet die absolute Engstelle (38') auf der Höhe der Leitschaufeln (32) und/oder zwischen den Leitschaufeln (32) angeordnet ist.

4. Austrittsleitgitter nach mindestens einem der vorherigen Ansprüche, **dadurch gekennzeichnet, dass** das Flächenverhältnis zwischen der Ringfläche (A_{Q}) an der absoluten Engstelle (38') und der Ringfläche (A_{E}) an der Vorderkante (E) kleiner als 75% ist.

5. Austrittsleitgitter nach mindestens einem der vorherigen Ansprüche, **dadurch gekennzeichnet, dass** der axiale Abstand der absoluten Engstelle (38') zur Hinterkante (H) maximal 20% der axialen Profillänge (s₀) der Leitschaufel (32) beträgt.

6. Austrittsleitgitter nach mindestens einem der vorherigen Ansprüche, **dadurch gekennzeichnet, dass** der axiale Abstand der absoluten Engstelle (38') zur Hinterkante (H) maximal 1 0% der axialen Profillänge (s₀) der Leitschaufel (32) beträgt.

7. Mantelstromtriebwerk mit einem Austrittsleitgitter nach mindestens einem der vorherigen Ansprüche, wobei das Mantelstromtriebwerk (2) insbesondere ein Nebenstromverhältnis von mindestens 6 aufweist.

## Claims

1. Outlet guide vane cascade comprising an outer wall (34'), an inner wall (36') for forming an annular duct (22) and for guiding the hot-gas stream, and comprising at least one guide vane (32), which is arranged between the outer wall (34') and the inner wall (36'), at least one constriction (38'), having a reduced cross section, being arranged between the leading edge (E) of the guide vane (32) and the end (35') of the outer wall (34') downstream of the flow, at least one absolute constriction (38') being arranged in the region between the leading edge (E) and the end (35') downstream of the flow closer to the trailing edge (H) of the guide vane (32) as the end (35') of the outer wall (34') downstream of the flow, **characterized in that**, when viewed in the axial direction, the absolute constriction (38') is arranged in the flow direction upstream of, downstream of or directly on the trailing edge (H) of the guide vane (32), the axial spacing between the absolute constriction (38') and the trailing edge (H) being at most 30% of the axial profile length (s₀) of the guide vane (32).

2. Outlet guide vane cascade according to claim 1, **characterized in that**, in the vicinity of the absolute constriction (38'), the outer wall (34') locally has a smaller radius (R₂) than in axially directly adjacent regions and/or, in the vicinity of the absolute constriction (Q), the inner wall (36') locally has a larger radius (R₁) than in axially directly adjacent regions.

3. Outlet guide vane cascade according to at least one of the preceding claims, **characterized in that**, when viewed in the circumferential direction, the absolute constriction (38') is arranged at the height of the guide vanes (32) and/or between the guide vanes (32).

4. Outlet guide vane cascade according to at least one of the preceding claims, **characterized in that** the area ratio between the annular area (A_{Q}) at the absolute constriction (38') and the annular area (A_{E}) at the leading edge (E) is less than 75%.

5. Outlet guide vane cascade according to at least one of the preceding claims, **characterized in that** the axial spacing between the absolute constriction (38') and the trailing edge (H) is at most 20% of the axial profile length (s₀) of the guide vane (32).

6. Outlet guide vane cascade according to at least one of the preceding claims, **characterized in that** the axial spacing between the absolute constriction (38') and the trailing edge (H) is at most 10% of the axial profile length (s₀) of the guide vane (32).

7. Bypass turbojet comprising an outlet guide vane cascade according to at least one of the preceding claims, wherein the bypass turbojet (2) comprises in particular a bypass ratio of at least 6.

## Revendications

1. Grille de guidage d'écoulement comportant une paroi extérieure (34') et une paroi intérieure (36') pour former un canal annulaire (22) et pour guider le courant de gaz chaud, et au moins une aube de guidage (32) disposée entre la paroi extérieure (34') et la paroi intérieure (36'),
dans laquelle au moins un rétrécissement réduisant la section transversale (38') est disposé entre le bord avant (E) de l'aube de guidage (32) et l'extrémité aval (35') de la paroi extérieure (34'),
dans laquelle au moins un rétrécissement absolu (38') est disposé dans la zone entre le bord avant (E) et l'extrémité aval (35') plus près du bord arrière (H) de l'aube de guidage (32) que de l'extrémité aval (35') de la paroi extérieure (34'),
**caractérisée en ce que,** observé dans la direction axiale, le rétrécissement absolu (38') est disposé dans la direction d'écoulement, avant ou après, ou même directement sur le bord arrière (H) de l'aube de guidage (32), la distance axiale entre le rétrécissement absolu (38') et le bord arrière (H) étant au maximum de 30 % de la longueur axiale (S₀) du profil de l'aube de guidage (32).

2. Grille de guidage d'écoulement selon la revendication 1, **caractérisée en ce que** la paroi extérieure (34') à proximité du rétrécissement absolu (38') présente localement un rayon (R₂) plus petit que dans les zones directement adjacentes axialement et/ou **en ce que** la paroi intérieure (36') à proximité du rétrécissement absolu (Q) présente localement un rayon (R₁) plus grand que dans les zones directement adjacentes axialement.

3. Grille de guidage d'écoulement selon au moins l'une des revendications précédentes, **caractérisée en ce que**, observé dans la direction circonférentielle, le rétrécissement absolu (38') est disposé au niveau des aubes de guidage (32) et/ou entre les aubes de guidage (32).

4. Grille de guidage d'écoulement selon au moins l'une des revendications précédentes, **caractérisée en ce que** le rapport de surface entre la surface annulaire (A_{q}) au rétrécissement absolu (38') et la surface annulaire (A_{E}) au bord avant (E) est inférieur à 75 %.

5. Grille de guidage d'écoulement selon au moins l'une des revendications précédentes, **caractérisée en ce que** la distance axiale du rétrécissement absolu (38') du bord arrière (H) est au maximum de 20 % de la longueur axiale (S₀) du profil de l'aube de guidage (32).

6. Grille de guidage d'écoulement selon au moins l'une des revendications précédentes, **caractérisée en ce que** la distance axiale entre le rétrécissement absolu (38') et le bord arrière (H) est au maximum de 10 % de la longueur axiale (S₀) du profil de l'aube de guidage (32).

7. Turbosoufflante avec une grille de guidage d'écoulement selon au moins l'une des revendications précédentes, **caractérisée en ce que** la turbosoufflante (2) présente en particulier un taux de dilution égal au moins à 6.
